# EUROPÄISCHE PATENTSCHRIFT

(11) **EP 2 754 530 B1**
(45) Veröffentlichungstag und Bekanntmachung des Hinweises auf die Patenterteilung: **29.03.2017**
(21) Anmeldenummer: 13150981.2
(22) Anmeldetag: 11.01.2013
(51) Int. Cl.: B23P 6/04, B23K 26/00, F01D 5/00, B23K 26/34

(54) **Verfahrweise beim Umschmelzen von Rissen**
Method for remelting cracks
Mode de fonctionnement lors de la refonte de fissures

(43) Veröffentlichungstag der Anmeldung: 16.07.2014
(73) Patentinhaber: Siemens Aktiengesellschaft, 80333 München (DE)
(72) Erfinder: Burbaum, Bernd, 14612 Falkensee (DE); Melzer-Jokisch, Torsten, 15366 Neuenhagen bei Berlin (DE)

(56) Entgegenhaltungen:
- EP-A1- 1 340 567
- EP-A1- 2 311 597
- WO-A1-2010/070548
- DE-A1-102008 018 708
- US-A- 4 562 332
- US-B1- 7 094 988

## Beschreibung

Die Erfindung betrifft ein Verfahren zum Umschmelzen eines Risses eines Bauteils mittels eines Schweißstrahls gemäß dem Oberbegriff des Anspruchs 1.

Ein solches Verfahren ist aus der US 4,562,332 A bekannt.

Bei servicebeanspruchten Komponenten, hergestellt aus polykristallin erstarrten Nickelbasis-Superlegierungen, ist ein Reparaturumschmelzen von durchgehenden Rissen mittels Laserstrahlung angestrebt, um die mechanischen Eigenschaften der zu reparierenden Komponenten im Bereich des Grundwerkstoffs zu erhalten.

Aufgrund der Anfälligkeit für Heißrisse beim Reparaturumschmelzen an Superlegierungen auf Nickelbasis ist eine Verbesserung notwendig.

Es ist daher Aufgabe der Erfindung oben genanntes Problem zu lösen.

Die Aufgabe wird gelöst durch ein Verfahren gemäß Anspruch 1. Da der Verlauf eines Risses unterhalb der Oberfläche meist unbekannt ist, wird vorgeschlagen, dass die Verfahrrichtung eines Schweißstrahls oder einer Laserstrahlung quer zur Ausbreitungsrichtung des Risses verläuft. In Experimenten wurde ermittelt, dass das Umschmelzen quer zur Ausbreitungsrichtung des Risses zu qualitativ besseren Umschmelzergebnissen bzgl. Rissschließung und Oberflächenqualität geführt hat im Vergleich zum Umschmelzen in Rissausbreitungsrichtung. Im Vergleich zum Umschmelzen in Rissausbreitungsrichtung wird zur Rissschließung ein größeres Volumen an Schmelze aufgeschmolzen, so dass die Schmelze homogener zur Rissschließung verteilt wird. Wird nur in Ausbreitungsrichtung des Risses umgeschmolzen, wird weniger Material zur Rissschließung umgeschmolzen und der Riss kann seitlich neben dem Schmelzbad ausreißen.

In den Unteransprüchen sind weitere vorteilhafte Maßnahmen aufgelistet, um weitere Vorteile zu erzielen, die beliebig miteinander kombiniert werden können, um zusätzliche Vorteile zu erzielen.

Es zeigen:
- Figur 1 - 4: erfindungsgemäße Verfahrmuster,

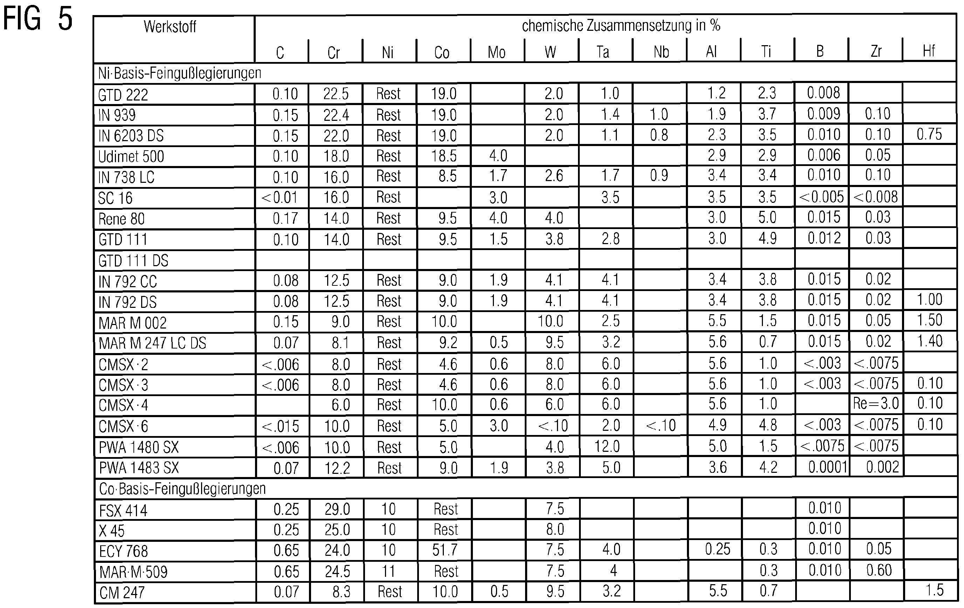

- Figur 5: eine Liste von Superlegierungen.

Die Figuren und die Beschreibung stellen nur Ausführungsbeispiele der Erfindung dar.

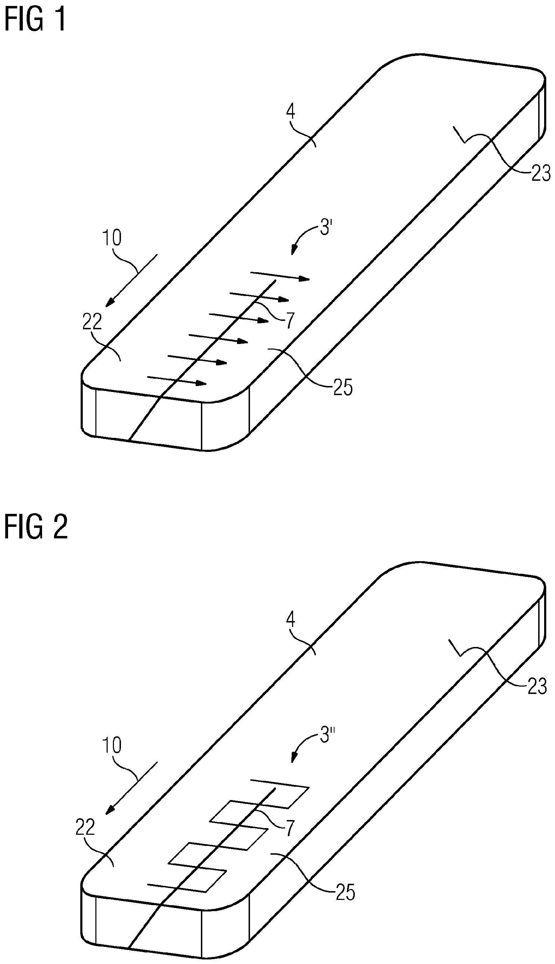

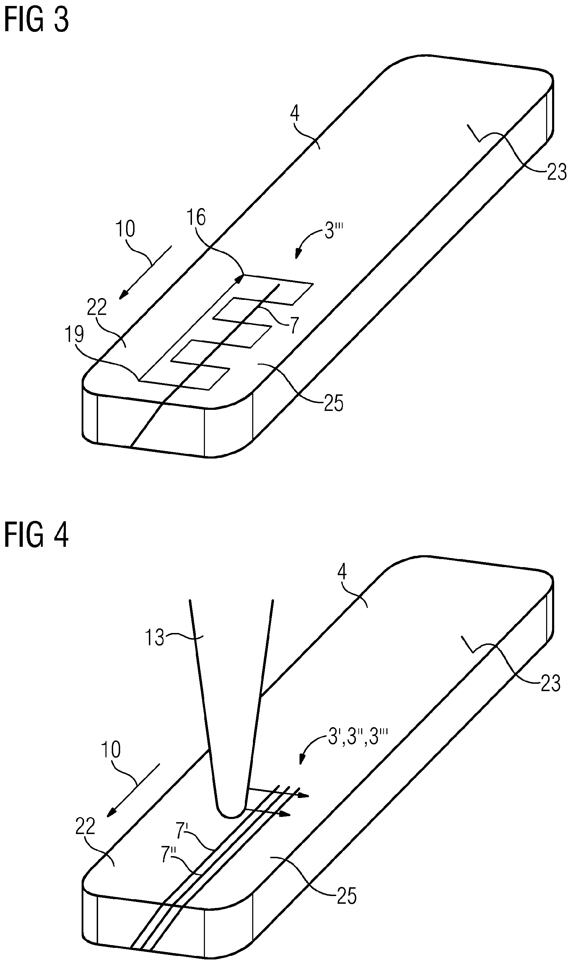

Es zeigt Figur 1 ein erstes Ausführungsbeispiel des Verfahrweges eines Schweißstrahls 13 (Fig. 4).
Ein Substrat eines Bauteils 4 weist auf einer Oberfläche 23 einen Riss 7 mit einer Ausbreitungsrichtung 10 auf, der umgeschmolzen werden soll.
Vorzugsweise wird kein Material aufgetragen.

Ein erfindungsgemäßes Verfahrmuster sieht vor, dass zumindest stellenweise quer oder senkrecht zur Ausbreitungsrichtung 10 der Schweißstrahl 13 über den Riss 7 verfährt.

Dabei sieht das Verfahrmuster 3' so aus, dass der Schweißstrahl von der einen Seite 22 des Risses 7 zu der anderen Seite 25 des Risses 7 verläuft, dann ausgeschaltet wird oder dann so verfahren wird, dass er das Bauteil 4 nicht umschmilzt und in Ausbreitungsrichtung 10 des Risses 7 verschoben wird und vorzugsweise auch noch quer zur Ausbreitungsvorrichtung 10 verschoben wird und dann wieder auf der einen Seite 22 des Risses 7 wieder quer zum Riss 7 verfahren wird.

Die Verfahrrichtung ist in den Figuren mit Pfeilen angedeutet und dargestellt und bedeutet, dass nur dort, wo der Pfeil ist, nur der Schweißstrahl 13 auch eingeschaltet ist.

Die einzelnen umgeschmolzenen Schweißbahnen quer zur Ausbreitrichtung 10 überlappen sich vorzugsweise (nicht dargestellt).

In Figur 2 ist ein anderes Verfahrmuster 3' gezeigt, bei dem im Zick-Zack-Muster oder in Mäanderform in Ausbreitungsrichtung 10 des Risses 7 über den Riss 7 verfahren wird.
Dabei wird der Abstand der Schweißbahn in Ausbreitungsrichtung 10 vorzugsweise so gewählt, dass sie sich überlappen.

In Figur 3 ist eine Modifikation 3''' des Ausführungsbeispiels gemäß Figuren 4, 2 oder 1 dargestellt, bei dem der Schweißstrahl vom Endpunkt 19 des Schweißens, d.h. nach vollständigen Umschmelzen Überfahren des Risses 7, noch einmal eingeschaltet zum Startpunkt 16 des Umschmelzens zurückläuft, um ggf. vorhandene Buckel einzuebnen.

Figur 4 zeigt ein weiteres Ausführungsbeispiel 3', 3'', 3''' der Erfindung, bei dem Mehrfachrisse 7', 7", ... umgeschmolzen werden.
Insbesondere solche Risse 7', 7'', ... können durch paralleles Verfahren entlang der Rissausbreitungsrichtung 10 nicht umschmolzen werden bzw. nicht erfasst werden.

Besonders eignet sich das Verfahren für Laserschweißen mit Laserstrahlen 13.

## Patentansprüche

1. Verfahren
zum Umschmelzen zumindest eines Risses (7, 7', 7'', ...) eines Bauteils (4) mittels eines Schweißstrahls (13), wobei der Riss (7, 7', 7'', ...) eine längliche Ausbreitungsrichtung (10) aufweist,
bei dem zumindest stellenweise der Schweißstrahl (13) quer, insbesondere senkrecht,
zur Ausbreitungsrichtung (10) des zumindest einen Risses (7, 7', 7'', ...) verfahren wird,
**dadurch gekennzeichnet, dass**
der Schweißstrahl (13) am Ende (19) des vollständigen Umschweißens des Risses (7, 7', 7'', ...) zum Startpunkt (16) zurück verfahren wird,
wobei der Schweißstrahl (13) dann in einem Abstand zum Riss (7, 7', 7'', ...) und insbesondere parallel zur Ausbreitungsrichtung (10) des Risses (7, 7', 7'', ...) verläuft.

2. Verfahren nach Anspruch 1,
bei dem der Schweißstrahl (13) sowohl parallel als auch quer zur Ausbreitungsrichtung (10) des Risses (7, 7', ...) verfahren wird,
insbesondere größtenteils quer verfahren wird,
ganz insbesondere wobei der Schweißstrahl (13) mäanderförmig verfahren wird.

3. Verfahren nach Anspruch 1,
bei dem der Schweißstrahl (13) nur quer oder nur senkrecht zur Ausbreitungsrichtung (10) des Risses (7) oder der Risse (7', 7'', ...) verfahren wird.

4. Verfahren nach Anspruch 3,
bei dem der Schweißstrahl immer nur von einer Seite (22) längs der Ausbreitungsrichtung (10) aus beginnt zu schweißen.

5. Verfahren nach einem oder mehreren der Ansprüche 1, 2, 3 oder 4,
bei dem mehrere eng nebeneinander verlaufende Risse (7', 7'', ...) umgeschmolzen werden.

6. Verfahren nach einem oder mehreren der vorherigen Ansprüche 1 bis 5,
bei dem ein Laserverfahren angewendet wird.

7. Verfahren nach einem oder mehreren der Ansprüche 1, 2, 3, 4, 5 oder 6,
bei dem kein Material aufgetragen wird.

8. Verfahren nach einem oder mehreren der vorherigen Ansprüche,
das bei polykristallinen Substraten von Bauteilen (4) angewendet wird.

9. Verfahren nach einem oder mehreren der vorherigen Ansprüche,
bei dem sich die Schweißbahnen überlappen.

## Claims

1. Method
for re-melting at least one crack (7, 7' , 7", ...) in a component (4) by means of a welding beam (13),
wherein the crack (7, 7', 7", ...) has a longitudinal direction of propagation (10),
in which, at least locally, the welding beam (13) is moved transversely to, in particular perpendicular to,
the direction of propagation (10) of the at least one crack (7, 7', 7", ...),
**characterized in that** the welding beam (13), at the end (19) of the complete re-welding of the crack (7, 7', 7'', ...), is moved back to the starting point (16),
wherein the welding beam (13) then proceeds at a distance from the crack (7, 7', 7", ...) and in particular parallel to the direction of propagation (10) of the crack (7, 7', 7'', ...).

2. Method according to Claim 1,
in which the welding beam (13) is moved both parallel to and transversely to the direction of propagation (10) of the crack (7, 7', ...),
in particular is moved transversely for the most part, especially wherein the welding beam (13) is moved in a meandering manner.

3. Method according to Claim 1,
in which the welding beam (13) is moved only transversely to or only perpendicular to the direction of propagation (10) of the crack (7) or cracks (7', 7'', ...).

4. Method according to Claim 3,
in which the welding beam only ever begins welding from one side (22) along the direction of propagation (10).

5. Method according to one or more of Claims 1, 2, 3 or 4,
in which a plurality of cracks (7', 7", ...) running close to one another are re-melted.

6. Method according to one or more of the preceding Claims 1 to 5,
in which a laser method is used.

7. Method according to one or more of Claims 1, 2, 3, 4, 5 or 6,
in which no material is deposited.

8. Method according to one or more of the preceding claims, which is used in the case of polycrystalline substrates of components (4).

9. Method according to one or more of the preceding claims, in which the welding tracks overlap.

## Revendications

1. Procédé
de refusion d'au moins une fissure (7, 7', 7'', ...) d'un composant (4) au moyen d'un faisceau (13) de soudage, la fissure (7, 7', 7'', ...) ayant une direction (10) de propagation oblongue,
dans lequel on déplace, au moins par endroit, le faisceau (13) de soudage transversalement, notamment perpendiculairement, à la direction (10) de propagation de la au moins une fissure (7, 7', 7'', ...) **caractérisé en ce que**
on ramène au point (16) de départ le faisceau (13) de soudage à la fin (19) de la refusion complète de la fissure (7, 7' , 7'', ...)
dans lequel le faisceau (13) de soudage s'étend alors à distance de la fissure (7, 7', 7'', ...) et notamment parallèlement à la direction (10) de propagation de la fissure (7, 7' , 7'', ...).

2. Procédé suivant la revendication 1,
dans lequel on déplace le faisceau (13) de soudage à la fois parallèlement et transversalement à la direction (10) de propagation de la fissure (7, 7', ...) en le déplaçant notamment pour une grande partie transversalement,
d'une manière tout à fait particulière en dépassant le faisceau (13) de soudage d'une manière sinueuse.

3. Procédé suivant la revendication 1,
dans lequel on déplace le faisceau (13) de soudage seulement transversalement ou seulement perpendiculairement à la direction (10) de propagation de la fissure (7) ou des fissures (7', 7'' ...).

4. Procédé suivant la revendication 3,
dans lequel le faisceau de soudage commence à effectuer le soudage, toujours seulement à partir d'un côté (22), le long de la direction (10) de propagation.

5. Procédé suivant l'une ou plusieurs des revendications 1, 2, 3 ou 4,
dans lequel on refusionne plusieurs fissure (7', 7'', ...) s'étendant étroitement les unes à côté des autres.

6. Procédé suivant l'une ou plusieurs des revendications précédentes 1 à 5,
dans lequel on utilise un procédé par laser.

7. Procédé suivant l'une ou plusieurs des revendications 1, 2, 3, 4, 5 ou 6,
dans lequel on ne dépose pas de matière.

8. Procédé suivant l'une ou plusieurs des revendications précédentes,
que l'on applique à des substrats polycristallins de composants (4).

9. Procédé suivant l'une ou plusieurs des revendications précédentes,
dans lequel les pistes de soudage se chevauchent.
